# DEMANDE DE BREVET EUROPEEN

(11) **EP 2 827 601 A1**
(43) Date de publication de la demande: **21.01.2015**
(21) Numéro de dépôt: 13177287.3
(22) Date de dépôt: 19.07.2013
(51) Int. Cl.: H04N 21/438, H04N 21/4623

(54) **Méthode et dispositif pour la protection des clés de déchiffrement d'un décodeur**

(71) Demandeur: Nagravision S.A., 1033 Cheseaux-sur-Lausanne (CH)
(72) Inventeur: Macchetti, Marco, 1033 Cheseaux-sur-Lausanne (CH); Perrine, Jérôme, 1122 Romanel sur Morges (CH); Servet, Patrick, 1033 Cheseaux-sur-Lausanne (CH); Hunacek, Didier, 1807 Blonay (CH)
(74) Mandataire: Leman Consulting S.A.

(57) **Abrégé**

La présente demande concerne le domaine de la télévision à péage, en particulier s'intéresse à la sécurisation des clés de déchiffrement de contenus audio/video. Dans ce care, il est proposé une méthode pour sécuriser des mots de contrôle stocké dans une mémoire d'un décodeur en charge de décrypter un ou des contenus audio/vidéo, ladite mémoire étant connectée à un gestionnaire de mémoire, cette méthode comprenant les étapes :
- réceptionner par le gestionnaire de mémoire au moins un mot de contrôle, et s'il est encrypté, décrypter ledit mot de contrôle pour en disposer en clair,
- charger dans un registre de clé d'appariement du module d'encryption du gestionnaire de mémoire, une clé d'appariement unique et propre au couple gestionnaire de mémoire/décodeur,
- charger dans un registre de clé d'appariement du module de décryption du décodeur, la clé d'appartement,
- encrypter ledit mot de contrôle et le stocker dans la mémoire,
- accéder par le décodeur la mémoire pour lire un mot de contrôle,
- décrypter le mot de contrôle encrypté,
- charger le mot de contrôle décrypté dans un registre de clé de décryption du contenu audio/video.

## Description

La présente demande concerne le domaine de la télévision à péage, en particulier s'intéresse à la sécurisation des clés de déchiffrement de contenus audio/video.

### Etat de la technique

Un contenu audio/vidéo est encrypté par des clés appelées mot de contrôle qui change régulièrement, par exemple toutes les minutes. Le contenu ainsi encrypté est ensuite transmis aux récepteurs selon un mode de diffusion, c'est-à-dire que le même contenu est reçu par une pluralité de récepteurs.

Les mots de contrôle sont encryptés par une clé de transmission qui change à une fréquence beaucoup plus basse, par exemple tout les mois. Un mot de contrôle encrypté est placé dans un message d'autorisation (ECM) accompagné des conditions de décryption. Ces conditions décrivent les droits que doit posséder le récepteur pour être autorisé à accéder au contenu. Les messages d'autorisation ECM sont joints au flux du contenu encrypté et envoyé à destination des récepteurs.

L'offre proposée aux abonnés de télévision à péage comprend de nombreux canaux qui sont chacun encryptés selon une ou des clés particulières. Ceci est nécessité par le fait qu'un abonné peut souscrire à un abonnement pour un canal sans avoir le droit de bénéficier des autres canaux.

Les messages d'autorisation ECM sont encryptés avec une clé propre au système de gestion. Le récepteur de l'abonné comprend entre autre, une unité cryptographique sécurisée en charge de décrypter ces messages et un décodeur qui va déchiffrer le contenu encrypté afin de pouvoir visualiser ledit contenu. Le système de gestion transmet ces messages ECM sous forme encrypté à l'unité cryptographique en charge de décrypter ces messages, gère les autorisations et selon les droits de l'abonné, transmet au décodeur les informations nécessaires au décryptage des signaux vidéo et audio.

Le résultat du décryptage par l'unité cryptographique est appelé "mot de contrôle" abrégé par "CW". Les mots de contrôle vont piloter le décodeur et l'abonné pourra ainsi bénéficier en clair des informations transmises.

Comme indiqué plus haut, ces mots de contrôle sont changés régulièrement afin d'empêcher un pirate de calculer ces informations de contrôle au moyen d'un ordinateur puissant, et bénéficier gratuitement de la prestation soumise à péage. C'est pourquoi ces mots de contrôle sont changés dans un intervalle usuellement régulier, la période étant typiquement de 1 à 20 secondes. Cette période est appelée crypto-période.

Les messages d'autorisation ECM sont envoyés avec une fréquence beaucoup plus élevée que la crypto-période, par exemple toutes les 100 millisecondes. Ceci est indispensable d'une part lors de la mise en service du décodeur et, d'autre part lors du changement de canaux.

En effet, pour pouvoir visualiser l'émission souhaitée, les mots de contrôle sont nécessaires au décryptage des signaux. On imagine mal devoir attendre 5 secondes devant son écran pour que l'image en clair apparaisse.

Dans le deuxième cas, les mots de contrôle étant propres à chaque canal, il faudrait attendre la fin de la crypto-période pour recevoir le message d'autorisation permettant le décryptage des signaux du nouveau canal. De la même manière que précédemment, on ne peut tolérer un délai de plusieurs secondes lors d'un changement de canal.

C'est pourquoi, dans la pratique, les messages d'autorisation ECM sont envoyés à une fréquence comprise entre 5 et 20 par seconde.

Ainsi, une fois que le décodeur a reçu le mot de contrôle, il peut décrypter le contenu audio/video. Un décodeur actuellement peut traiter plus d'un flux audio/vidéo encrypté à la fois. Ceci peut être le cas pour une fonction PIP (Picture-In-Picture), l'enregistrement d'un flux et le visionnement d'un autre, ou le visionnement simultané de plusieurs flux sur plusieurs écrans. A cet effet, le décodeur pourra traiter en parallèle plusieurs flux et donc doit disposer de plusieurs mots de contrôle en même temps.

Une autre explication de la présence de plusieurs mots de contrôle concernant plusieurs canaux et la vitesse de changement de canal. En effet, il est souhaitable que ce changement se fasse dans le temps le plus court et selon un mode particulier, bien que le décodeur puisse traiter un ou deux flux simultanément, le décodeur peut stocker 10 ou 20 mot de contrôle à un temps donné. L'unité cryptographique en charge de traiter les ECM va extraire les mots de contrôle d'une pluralité de canaux et les envoyer au décodeur même si ce dernier n'est pas en charge de décrypter ce contenu. Ceci permet d'être immédiatement prêt avec le mot de contrôle chargé dans le décodeur dès que l'utilisateur demande un changement de canal.

Bien que pour un temps donné, un seul mot de contrôle est actif, le décodeur doit disposer du mot de contrôle courant et du mot de contrôle suivant. A cet effet, le contenu encrypté comprend une indication pour identifier le mot de contrôle (ODD,EVEN).

Sur la base de ce qui précède, il est apparent qu'un décodeur va mémoriser un grand nombre de mots de contrôle, soit pour une utilisation simultanée, soit pour être prêt en cas de changement de canaux, soit pour une combinaison de ces deux modes. Il peut ainsi décrypter trois canaux simultanément et stocker les mots de contrôle pour les 30 canaux possibles que l'utilisateur peut recevoir. Chaque canal représentant deux mots de contrôle.

Du fait que l'unité cryptographique est sécurisée d'une manière satisfaisante, des tiers malveillants se sont intéressés à l'interception des mots de contrôle transmis par l'unité cryptographique. C'est pourquoi des solutions ont été proposées comme décrite dans le brevet EP 1078524. Une encryption est réalisée sur les mots de contrôle par l'unité cryptographique avant leur transmission au récepteur. Le récepteur et l'unité cryptographique partagent une clé unique ce qui permet d'apparier ces deux éléments. Un message intercepté entre ces deux éléments ne peut être utilisé par un autre récepteur puisque la clé d'appariement est unique.

Une fois arrivé dans le récepteur, le message est décrypté par la clé d'appariement et le mot de contrôle est stocké en clair dans une mémoire sécurisée du récepteur.

### Brève description de l'invention

La présente demande traite de la question de la sécurité des clés de déchiffrement stockées dans le décodeur. Le décodeur selon l'invention fait partie du récepteur et est généralement sous la forme d'un composant spécialisé intégrant de nombreuses fonctions telles que la gestion du récepteur, l'affichage des menus, la gestion de l'enregistrement. Il s'agit d'un microprocesseur spécialisé qui intègre sur une partie du silicium une fonction décodeur. Ce composant dispose de mémoire interne et peut accéder à de la mémoire externe soit forme de programme ou données.

Généralement, les mots de contrôle sont stockés dans une mémoire interne dédiée à cet effet. Il faut que les mots de contrôle soient disponibles très rapidement lors d'un changement de clé. Bien que cette mémoire soit difficile d'accès, les attaques software ou par glitch, laser, buffer overflow ont donné des résultats positifs.

C'est pourquoi il est proposé de sécuriser cette mémoire par l'encryption des mots de contrôle en attente d'être utilisé.

Il est ainsi proposé une méthode pour sécuriser des mots de contrôle stocké dans une mémoire d'un décodeur en charge de décrypter un ou des contenus audio/vidéo, ladite mémoire étant connectée à un gestionnaire de mémoire, cette méthode comprenant les étapes :
- réceptionner par le gestionnaire de mémoire au moins un mot de contrôle, et s'il est encrypté, décrypter ledit mot de contrôle pour en disposer en clair,
- charger dans un module d'encryption du gestionnaire de mémoire, une clé d'appariement unique et propre au couple gestionnaire de mémoire/décodeur,
- charger dans un module de décryption du décodeur, la clé d'appariement,
- encrypter ledit mot de contrôle et le stocker dans la mémoire,
- accéder par le décodeur la mémoire pour lire un mot de contrôle,
- décrypter le mot de contrôle encrypté,
- charger le mot de contrôle décrypté dans un registre de clé de décryption du contenu audio/video.

La présente demande propose également un nouveau composant électronique comprenant un décodeur en charge de décrypter un contenu audio/vidéo grâce à un mot de contrôle, un gestionnaire de mémoire et une mémoire stockant au moins un mot de contrôle, ledit gestionnaire de mémoire composant un registre de clé d'appariement et ledit décodeur comprenant un registre de clé d'appariement, ledit gestionnaire comprenant des moyens pour recevoir un mot de contrôle et des moyens pour l'encrypter avec ladite clé d'appariement avant le stockage dudit mot de contrôle dans la mémoire, ledit décodeur comprenant des moyens de décryption pour décrypter ledit mot de contrôle lu dans la mémoire grâce à la clé d'appariement et pour l'appliquer à un registre de clé de décryption du contenu audio/vidéo.

### Brève description des figures

La présente invention sera mieux comprise grâce aux explications basées sur les figures à savoir :
- la figure 1 illustre les différents composants participant à l'invention d'un récepteur,
- la figure 2 illustre les échanges entre les différents éléments.

### Description détaillée

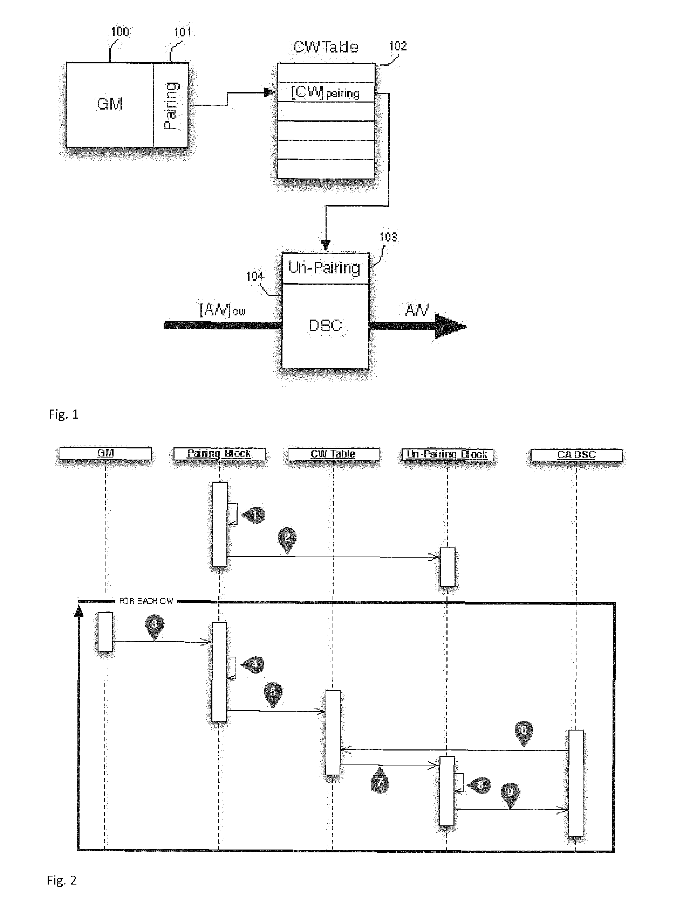

La figure 1 illustre le composant électronique, en particulier les éléments participants à l'invention. Le décodeur 104 (DSC) reçoit le flux audio/vidéo encrypté par un mot de contrôle (A/V)cw, le décrypte et fourni le flux en clair audio/vidéo A/V. Le module décodeur DSC comprend au moins un registre de clé de déchiffrement pour stocker le mot de contrôle nécessaire à la décryption. Le décodeur comprend un module de décryption 103 (Un-Pairing) qui dispose d'un registre de clé d'appariement. Ce registre stocke la clé d'appariement et permet de décrypter le mot de contrôle encrypté. Selon un mode de réalisation, l'élément décodeur 104 peut être multiplié pour pouvoir traiter plusieurs flux A/V en parallèle. Chaque décodeur 104 comprend un registre de clé de déchiffrement comprenant le mot de contrôle courant et le mot de contrôle suivant. Le module de décryption 103 peut être commun à plusieurs décodeurs et permet de décrypter le ou les mots de contrôle et les charger dans le registre de clé de déchiffrement correspondant au décodeur.

Selon un mode de réalisation, le récepteur comprend au moins deux décodeurs capables de traiter des flux A/V encrypté selon des algorithmes différents. Par exemple, un premier décodeur est de type DVB-CSA et un autre est de type AES. Le message de contrôle, contenant le mot de contrôle, contient également une indication pour quel type d'algorithme et donc de décodeur il est prévu. Cette indication est stockée par le gestionnaire de mémoire dans la mémoire de mots de contrôle avec le mot de contrôle.

Il est dès lors possible (mais non nécessaire) d'utiliser une clé de chiffrement différente par type de décodeur. En effet, le gestionnaire de mémoire peut disposer de plus d'un registre de clé d'appariement, par exemple un pour le décodeur DVB-CSA et au autre pour le décodeur AES. Grâce à l'indication contenue dans le message de contrôle, le gestionnaire de mémoire peut sélectionner la clé d'appariement du décodeur concerné et encrypter le mot de contrôle avec cette clé.

Il est à noter que l'indication décrite ci-dessus peut être remplacée par la détection du format du mot de contrôle. Un mot de contrôle pour DVB-CSA peut être de taille différente qu'un mot de contrôle pour AES. Ceci permet au gestionnaire de mémoire de sélectionner la clé d'appariement pour le décodeur concerné.

La procédure d'initialisation de la clé d'appariement se fera entre le gestionnaire de mémoire et chaque décodeur. La clé d'appariement est ainsi différente pour chaque décodeur.

Le décodeur 104 et le module de décryption 103 sont intimement liés et se trouve de préférence dans la même région sur le silicium. Ce module de décryption 103 est connecté à la mémoire des mots de contrôle 102 qui stocke les mots de contrôle sous forme encryptée. La mémoire comprend les mots de contrôle encryptés et peut contenir un identifiant permettant d'identifier le canal vidéo auquel il se rapporte. Le décodeur, lors de l'envoi d'une requête d'un mot de contrôle, peut ajouter un identifiant afin de déterminer lequel mot de contrôle est concerné.

Du fait de sa structure, la mémoire 102 peut être placée dans un environnement moins sécurisé, par exemple être une section de la mémoire commune de l'unité de traitement (microprocesseur) du récepteur.

Le gestionnaire de mémoire 100 (GM) est en charge de recevoir le mot de contrôle d'une unité cryptographique en charge de traiter les messages de contrôle ECM. Cette unité peut être sous la forme d'un module physique indépendant comme une carte à puce, ou un circuit électronique monté dans le récepteur, ou une section de silicium d'un composant électronique généraliste comprenant le décodeur, le traitement du signal audio/vidéo et tous les éléments du récepteur. Le gestionnaire de mémoire peut être une partie de l'unité cryptographique.

Ce mot de contrôle CW est généralement encrypté afin de protéger la transmission entre l'unité cryptographique et le décodeur. C'est pourquoi le gestionnaire de mémoire 100 comprend un module de décryption pour obtenir le mot de contrôle en clair. Une fois obtenu, ce mot de contrôle est immédiatement encrypté par un module d'encryption 101 en utilisant la clé d'appariement. Ce mot de contrôle est ensuite stocké dans la mémoire 102.

La figure 2 illustre le fonctionnement dynamique de l'ensemble. La première étape est de charger la clé d'appariement dans le module d'encryption 101 et le module de décryption 103. Plusieurs scénarios sont possibles :
- La clé est chargée de manière permanente lors d'une phase d'initialisation du récepteur. Lors de la fabrication du récepteur, ou lors d'une phase de préparation du récepteur pour un opérateur donné ou un client donné, le récepteur est placé en mode de test et une clé d'appariement est générée, soit par l'équipement de test, soit par le processeur du récepteur et est transmise au module d'encryption 101 et au module de décryption 103. Cette clé est stockée pour la vie du récepteur jusqu'à ce qu'un nouveau mode de test soit initialisé.
- La clé est chargée à chaque mise sous tension du récepteur. Pour cela, une clé est générée aléatoirement par l'un des deux modules 101 ou 103 et transmise à l'autre module. Le générateur aléatoire peut être une vraie source de nombre aléatoire, une source de nombre pseudo-aléatoire, un mélange de données physique du récepteur tels que température, date, temps de réaction de la télécommande. Cette génération est illustrée sur la figure 2 par l'étape (1). Dans ce cas, c'est le module d'encryption 101 qui génère la clé (1) et la transmet (2) au module de décryption 103. Il est à noter que le canal entre ces deux modules est sécurisé, c'est-à-dire qu'une clé de session est négociée entre ces deux modules, par exemple en utilisant l'algorithme Diffie-Helmann. Un autre moyen d'assurer la protection du canal est par des moyens matériels. Le bus sur lequel transitent les échanges ente les modules 101 et 103 est un bus privé accessible uniquement par ces deux modules. Selon un mode de réalisation, le nombre aléatoire généré par un des deux modules est ensuite appliqué à une fonction cryptographique contenue dans le module, initialisée par une clé de personnalisation. Cette clé est initialisée lors d'une phase d'initialisation préalable. Ainsi, il est possible de personnaliser chaque récepteur ou groupe de récepteurs avec une valeur particulière de clé de personnalisation. La fonction cryptographique peut est du type à sens unique (fonction Hash). Le résultat de la fonction cryptographique est la clé d'appariement. Même si le générateur de nombre aléatoire a été compromis et génère toujours la même valeur, le fait de modifier cette valeur par la fonction cryptographique va fournir une clé d'appariement qui sera différente d'un (ou d'un groupe) de récepteur à un autre.

La deuxième partie de la figure 2 illustre le fonctionnement avec un mot de contrôle. Le gestionnaire de mémoire 101 (GM) a reçu un mot de contrôle et l'envoie (3) au module d'encryption 101. Ce dernier, grâce à la clé d'appariement, l'encrypte (4) et l'envoi (5) dans la mémoire 102.

Lorsque le décodeur 104 a besoin d'un mot de contrôle, il le requiert (6) à la mémoire 102. Ce mot de contrôle est lu (7) par le module de décryption 103 et décrypté (8) grâce à la clé d'appariement. Un fois décrypté, il est envoyé (9) au décodeur 104 qui le charge dans son registre de mot de contrôle.

## Revendications

1. Méthode pour sécuriser des mots de contrôle stocké dans une mémoire d'un décodeur en charge de décrypter un ou des contenus audio/vidéo, ladite mémoire étant connectée à un gestionnaire de mémoire, cette méthode comprenant les étapes :
- réceptionner par le gestionnaire de mémoire au moins un mot de contrôle, et s'il est encrypté, décrypter ledit mot de contrôle pour en disposer en clair,
- charger dans un registre de clé d'appariement du module d'encryption du gestionnaire de mémoire, une clé d'appariement unique et propre au couple gestionnaire de mémoire/décodeur,
- charger dans un registre de clé d'appariement du module de décryption du décodeur, la clé d'appariement,
- encrypter ledit mot de contrôle et le stocker dans la mémoire,
- accéder par le décodeur la mémoire pour lire un mot de contrôle,
- décrypter le mot de contrôle encrypté,
- charger le mot de contrôle décrypté dans un registre de clé de décryption du contenu audio/video.

2. Méthode selon la revendication 1, **caractérisée en ce que** la mémoire comprend une pluralité de mots de contrôle encrypté, et **en ce que** lors de l'accès à la mémoire par le décodeur, ce dernier transmet un identifiant permettant d'identifier le mot de contrôle souhaité.

3. Méthode selon la revendication 1 ou 2, **caractérisée en ce que** le chargement de la clé d'appariement dans le module d'encryption du gestionnaire de mémoire et dans le module de décryption du décodeur comprend les étapes suivantes :
- génération d'une clé d'appariement par le module d'encryption du gestionnaire de mémoire ou par le module de décryption du décodeur,
- transmission de ladite clé d'appariement à l'autre module,
- chargement de ladite clé d'appariement dans le registre de clé d'appariement desdits modules.

4. Méthode selon la revendication 3, **caractérisée en ce que** la clé d'appariement est générée selon les étapes suivantes :
- obtention d'un nombre aléatoire, ce nombre aléatoire pouvant être obtenu d'un générateur de nombre aléatoire, d'une source de nombre pseudo-aléatoire, un d'un mélange de données physique du récepteur tels que température, date, temps de réaction de l'utilisateur,
- application dudit nombre aléatoire à une fonction cryptographique contenue dans le module, initialisée par une clé de personnalisation pour l'obtention de la clé d'appariement.

5. Méthode selon la revendication 3 ou 4, **caractérisée en ce qu'**avant la transmission de ladite clé d'appariement à l'autre module, ladite méthode comprend une étape de création d'un canal sécurisé enter lesdits modules par l'établissement d'une clé de session.

6. Méthode selon la revendication 5, **caractérisée en ce que** la transmission de ladite clé d'appariement à l'autre module est réalisée sur un bus privé uniquement accessible par ledits modules.

7. Méthode selon la revendication 1 ou 2, **caractérisée en ce que** le chargement de la clé d'appariement dans le module d'encryption du gestionnaire de mémoire et dans le module de décryption du décodeur est effectuée lors d'une phase d'initialisation, ladite clé d'appariement étant stockée de manière permanente.

8. Méthode selon l'une des revendications 1 à 7, **caractérisée en ce qu'**un récepteur comprend au moins deux décodeurs, chaque décodeur comprenant son module de décryption de décodeur et sa propre clé d'appariement, différente de la clé ou des clés d'appariement du ou des autres décodeurs, le gestionnaire de mémoire déterminant pour quel décodeur ledit mot de contrôle est destiné et utilise la clé d'appariement propre audit décodeur pour encrypter le mot de contrôle.

9. Composant électronique comprenant au moins un décodeur en charge de décrypter un contenu audio/vidéo grâce à un mot de contrôle, un gestionnaire de mémoire et une mémoire stockant au moins un mot de contrôle, ledit gestionnaire de mémoire composant un registre de clé d'appariement et ledit décodeur comprenant un registre de clé d'appariement, ledit gestionnaire comprenant des moyens pour recevoir un mot de contrôle et des moyens pour l'encrypter avec ladite clé d'appariement avant le stockage dudit mot de contrôle dans la mémoire, ledit décodeur comprenant des moyens de décryption pour décrypter ledit mot de contrôle lu dans la mémoire grâce à la clé d'appariement et pour l'appliquer à un registre de clé de décryption du contenu audio/vidéo.
